(19)

**Europäisches Patentamt**

**European Patent Office**

**Office européen des brevets**

(11) **EP 4 779 714 A1**

(12) **EUROPEAN PATENT APPLICATION**

(43) Date of publication:
22.07.2026 Bulletin 2026/30

(21) Application number: 26152392.2

(22) Date of filing: 16.01.2026

(51) International Patent Classification (IPC):
*H01M 4/36* (2006.01)    *H01M 4/38* (2006.01)
*H01M 4/62* (2006.01)

(52) Cooperative Patent Classification (CPC):
**H01M 4/366; H01M 4/386; H01M 4/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.01.2025 CN 202510089274**

(71) Applicants:
• **Hon Hai Precision Industry Co., Ltd.**
**New Taipei 236 (TW)**

• **SolidEdge Solution Inc.**
**Hsinchu 300 (TW)**

(72) Inventors:
• **CHEN, MAO-SUNG**
**300 Hsinchu City (TW)**
• **CHEN, WEI-LUN**
**300 Hsinchu City (TW)**
• **CHANG, TSENG-LUNG**
**300 Hsinchu City (TW)**

(74) Representative: **Metida**
**Gyneju str. 16**
**01109 Vilnius (LT)**

(54) **SILICON-CARBON COMPOSITE ANODE MATERIAL, METHOD FOR PREPARING THE SAME, AND SECONDARY BATTERY**

(57) The present disclosure relates to a silicon-carbon composite anode material, which has a core-shell structure including a core layer of nano-silicon and a shell layer at least partially or fully coating the core layer of nano-silicon, the shell layer includes at least one layer of nitrogen-doped graphite. Sizes of the core-shell structure are in a range of 5 μm to 10 μm, and the nitrogen content of the nitrogen-doped graphite layer is less than or equal to 10%. Additionally, the present disclosure provides a preparation method for the silicon-carbon composite anode material and a secondary battery including the silicon-carbon composite anode material.

FIG. 1

**Description**

CROSS-REFERENCE TO RELATED APPLICATION(S)

The present application claims the benefit and priority to Chinese Patent Application Serial No. 202510089274.0, filed on January 21, 2025, in China National Intellectual Property Administration, and the content of which is hereby fully incorporated by reference into the present application.

**FIELD**

The subject matter herein generally relates to battery technologies, and more particularly, to a silicon-carbon composite anode material, a method for preparing the same, and a secondary battery.

**BACKGROUND**

In recent years, lithium-ion batteries have been widely used in electric vehicles, consumer electronic products, etc. The cost, energy density, rate capability, cycle life and safety of lithium-ion batteries largely depend on the electrode materials used in them.

Due to its advantages of wide availability, low cost, environmental friendliness, high specific capacity (4200 mAh·g$^{-1}$), a voltage plateau slightly higher than that of graphite, and no lithium metal deposition on its surface during charging, silicon is regarded as a new-generation anode material expected to replace graphite anodes. However, as a semiconductor material, silicon has an electrical conductivity of only $10^3\Omega\cdot$m, resulting in an initial Coulombic efficiency (ICE%) of less than 80% during the first charge-discharge cycle. Meanwhile, silicon materials exhibit a large volume change rate during charge and discharge, which causes cracking and pulverization of the silicon material, leading to the separation of active materials from the current collector and loss of contact, thereby resulting in short circuits. Therefore, there is an urgent need to address the problems of poor electrical conductivity and volume expansion of silicon materials during charge and discharge.

**SUMMARY**

In view of this, it is necessary to provide a silicon-carbon composite anode material and a preparation method thereof that can address the problems of poor electrical conductivity and volume expansion of silicon materials during charge and discharge, as well as a secondary battery using the aforementioned silicon-carbon composite anode material.

A silicon-carbon composite anode material, the silicon-carbon composite anode material has a core-shell structure including a core layer of nano-silicon and a shell layer at least partially or fully coating the core layer of nano-silicon, the shell layer includes at least one layer of nitrogen-doped graphite.

A preparation method of a silicon-carbon composite anode material includes the following steps: a nitrogen-containing substance is introduced into at least one layer of two-dimensional graphite layer to form at least one layer of nitrogen-doped graphite; silicon material is nanonized in a protective environment to form nano-silicon; the at least one layer of nitrogen-doped graphite, nano-silicon, and a polymer compound are subjected to homogenized self-assembly in the protective environment to form a composite; the composite is granulated in the protective environment to obtain spherical precursors; and the spherical precursors are sintered in a reducing atmosphere or in a vacuum environment to obtain the silicon-carbon composite anode material.

A secondary battery includes a cathode, an anode, an electrolyte and a separator. The anode includes the aforementioned silicon-carbon composite anode material.

Compared with the prior art, the silicon-carbon composite anode material provided by the present disclosure includes a core-shell structure including a core layer of nano-silicon and a shell layer at least partially or fully coating the core layer of nano-silicon, the shell layer includes at least one layer of nitrogen-doped graphite. Therefore, nano-silicon is firmly bonded to the nitrogen-doped graphite layer, the nitrogen-doped graphite layer is not prone to falling off and peeling from nano-silicon, and the nitrogen-doped graphite layer can inhibit the volume expansion of nano-silicon and improve the poor electrical conductivity of nano-silicon. Furthermore, the preparation method of the silicon-carbon composite anode material has a simple process, allows for easy process control, and is suitable for industrial production.

**BRIEF DESCRIPTION OF THE DRAWINGS**

Implementations of the present technology will now be described, by way of example only, with reference to the attached figures.

FIG. 1 is a process flow diagram of a preparation method of the silicon-carbon composite anode material in an embodiment of the present disclosure.

FIG. 2 is a scanning electron microscope (SEM) photograph of at least one layer of nitrogen-doped graphite in an embodiment of the present disclosure.

FIG. 3 is a Raman spectrum of the at least one layer of nitrogen-doped graphite and graphene in an embodiment of the present disclosure.

**DETAILED DESCRIPTION**

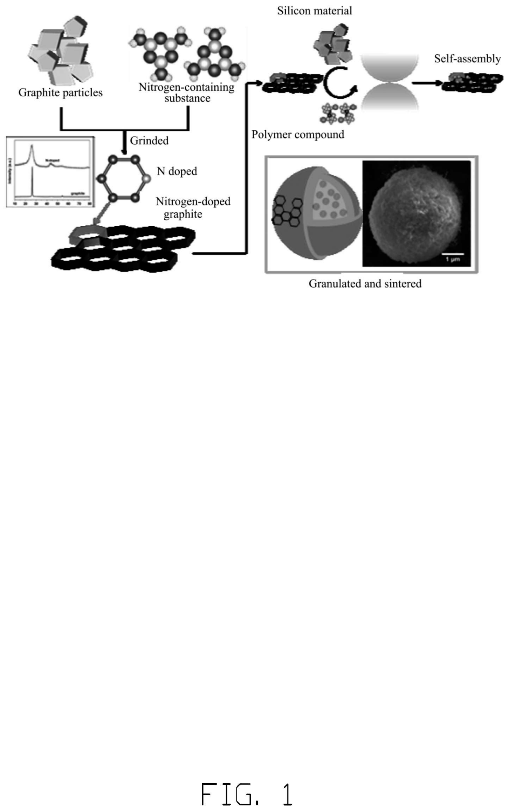

Hereinafter, the silicon-carbon composite anode material, its preparation method, and the secondary battery of the present disclosure will be further described in detail with reference to the accompanying drawings.
Unless otherwise defined, all technical and scientific terms used herein have the same meanings as commonly understood by those skilled in the technical field of the embodiments of the present application. The terms used herein are only for the purpose of describing specific implementations and are not intended to limit the embodiments of the present application.
In addition, the terms used herein are only for describing specific implementations and are not intended to limit the implementations. Expressions used in the singular include the plural unless the context clearly indicates otherwise. In this specification, the terms "comprising" and "having" indicate the presence of the listed features, integers, steps, operations, components, and/or structures, and do not exclude the presence or addition of one or more other features, integers, steps, operations, components, structures, and/or sets thereof.
Furthermore, the numerical values stated herein are within the allowable deviation range for the specific value determined by those of ordinary skill in the art considering errors related to measuring the specific quantity (e.g., limitations of the measurement system). For example, it may mean within one or more standard deviations relative to the stated value, or within $\pm 20\%$, $\pm 10\%$, or $\pm 5\%$.
The technical solution of the present disclosure will be further described in detail below based on the specification, drawings, and specific embodiments.
Referring to FIG. 1, a method of preparing a silicon-carbon composite anode material is provided according to an embodiment of the present disclosure. The method includes the following steps.
S1: at least one layer of two-dimensional graphite layer is provided, and a nitrogen-containing substance is introduced into the at least one layer of two-dimensional graphite layer by intercalation to form at least one layer of nitrogen-doped graphite.
S2: silicon material is nanosized in a protective environment to form nano-silicon.
S3: Under the protective environment, the at least one layer of nitrogen-doped graphite, nano-silicon, and a polymer compound are subjected to homogeneous self-assembly to form a composite.
S4: Under the protective environment, the composite is subjected to granulation to obtain spherical precursors.
S5: The spherical precursors are sintered in a reducing atmosphere or in a vacuum environment.
In step S1, bulk natural graphite, artificial graphite, mesocarbon microbeads, etc., can be exfoliated into the at least one layer of two-dimensional graphite layer. The two-dimensional graphite layer is a two-dimensional layered graphite material. Sizes of the two-dimensional graphite layer are related to sizes of particles formed by subsequent granulation. In some embodiments, the at least one layer of two-dimensional graphite layer havs lengths in at least one dimension in a range of 1 $\mu$m to 3 $\mu$m. In an embodiment, the sizes of the two-dimensional graphite layer are in a range of about 2 $\mu$m.
A nitrogen-containing substance (such as hydrazine, ethylenediamine, ammonia water, urea, melamine, etc.) is introduced into the two-dimensional graphite layer by intercalation through physical means to further improve the thickness of the two-dimensional graphite layer. The two-dimensional graphite layer has a layered structure including a plurality of two-dimensional graphite layers, wherein the number of the graphite layers is denoted by n, n is less than or equal to three($n \leq 3$). Specifically, the two-dimensional graphite layer is placed in a dispersion of the nitrogen-containing substance and stirred. The dispersion includes water, ethanol, ethylene glycol, etc. In the embodiment, the nitrogen-containing substance is melamine, the dispersion is ethanol, and the dispersion of the nitrogen-containing substance is an ethanol solution containing melamine. Since the number of graphite layers in the two-dimensional graphite layer is 3 or less, the two-dimensional graphite layer has strong structural mechanical properties, and stirring will not damage the structure of the two-dimensional graphite layer. The nitrogen-containing substance will penetrate or be introduced into the interlayers of the two-dimensional graphite layer to form the at least one layer of nitrogen-doped graphite, and the interlayers of the at least one layer of nitrogen-doped graphite are bonded by non-covalent bonds. In some embodiments, the two-dimensional graphite layer is graphene, and the at least one layer of nitrogen-doped graphite is nitrogen-doped graphene. The nitrogen content of the at least one layer of nitrogen-doped graphite is 0.1% to 10%, for example, the nitrogen content of the at least one layer of nitrogen-doped graphite is 1% to 10%, 5% to 10%, or 2% to 5%. In some embodiments, the nitrogen content of the at least one layer of nitrogen-doped graphite is 3%.

A surface of the at least one layer of nitrogen-doped graphite carries a positive charge, which originates from nitrogen. Since nitrogen inherently carries the positive charge, which facilitates the deposition of nano-silicon particles with a size in a range of less than 100 nm on the at least one layer of nitrogen-doped graphite. That is, the at least one layer of nitrogen-doped graphite (e.g., at least one layer of nitrogen-doped graphite with a size of 2 $\mu$m) supports nano-silicon particles and provides a supporting effect when silicon expands.

In step S2, the silicon material may be semiconductor-grade silicon material (sizes of the silicon material are in a range of greater than or equal to 10 $\mu$m). The nanonization can be achieved by, but not limited to, mechanical processing, mechanical ball milling, etc., where the mechanical ball milling can be dry milling or wet milling. Nano-silicon can also be prepared by chemical methods or physical vapor deposition (PVD). During the deposition process, an alkane atmosphere such as $CH_4$ can be introduced whereby nano-silicon can function as a precursor for carbon coating, and surface carbonization is formed after sintering. However, the method has high cost and is not suitable for large-scale industrial production.

The protective environment is a vacuum environment, or is obtained by introducing an inert atmosphere or adding a solvent. The inert atmosphere includes at least one of argon (Ar), nitrogen ($N_2$), and helium (He). The inert atmosphere can provide an oxygen-free environment to prevent nano-silicon from being oxidized, so that the prepared silicon-carbon composite anode material is free of silicon oxide ($SiO_x$), which is conducive to improving the electrochemical performance of the silicon-carbon composite anode material and reducing the volume effect.

The solvent may include at least one of diethylene glycol (DEG), polyethylene glycol (PEG), propylene glycol (PG), and dimethyl sulfoxide (DMSO). The solvent can prevent nano-silicon from being oxidized, so that the prepared silicon-carbon composite anode material is free of silicon oxide ($SiO_x$), which is conducive to improving the electrochemical performance of the silicon-carbon composite anode material and reducing the volume effect.

In some embodiments, particle sizes of nano-silicon are in a range of 50 nm to 100 nm. This facilitates subsequent self-assembly coating and prepares a silicon-carbon composite anode material with a suitable particle size to adapt to the current slurry preparation process of secondary batteries.

In step S3, the composite has a layered structure. The polymer compound is an amphoteric polymer with both hydrophobic groups and hydrophilic groups. Further, the polymer compound may include at least one of polyvinylpyrrolidone (PVP), polyvinyl alcohol (PVA), polyphthalamide (PPA), polyacrylic acid (PAA), N-allyl-(2-ethylxanthate)propionamide (NAPA), and dimethylformamide (DMF). The polymer compound is a medium containing, for example, amino groups and hydroxyl groups. By utilizing the characteristic that one end of the polymer compound has a hydrophilic group (at least one hydrophilic side chain) and the other end has a hydrophobic group (at least one hydrophobic side chain), the difference in hydrophilicity and hydrophobicity between nano-silicon and the at least one layer of nitrogen-doped graphite can be improved.

Specifically, the hydrophilic group at one end of the polymer compound bonds with nano-silicon, and the hydrophobic group at the other end of the polymer compound bonds with the at least one layer of nitrogen-doped graphite, so that nano-silicon is firmly located on the at least one layer of nitrogen-doped graphite and is not prone to agglomeration with other nano-silicon particles. Thus, the at least one layer of nitrogen-doped graphite, the polymer compound, and nano-silicon can undergo homogeneous self-assembly to form a layered structure.

That is, the polymer compound is first used to coat a surface of nano-silicon, and then by utilizing the hydrophilic and hydrophobic characteristics of the two ends of the polymer compound, the polymer chains at the hydrophobic end can further combine with the subsequently added at least one layer of nitrogen-doped graphite, thereby completing the ordered stacking self-assembly of silicon, polymer compound, and at least one layer of nitrogen-doped graphite. Therefore, in some embodiments, in the process of homogenizing the at least one layer of nitrogen-doped graphite, nano-silicon, and a polymer compound to form a composite, nano-silicon and the polymer compound are mixed first, and then the at least one layer of nitrogen-doped graphite is added.

Further, the homogeneous self-assembly process can be, but not limited to, mechanical processing, electrical discharge machining, or mechanical ball milling, etc. Among them, mechanical ball milling can be dry milling or wet milling. After the homogeneous self-assembly process, the at least one layer of nitrogen-doped graphite and nano-silicon are bonded by non-covalent bonds.

The at least one layer of nitrogen-doped graphite with a two-dimensional layered structure covers nano-silicon, and the interlayers of the at least one layer of nitrogen-doped graphite are bonded by non-covalent bonds, so that the at least one layer of nitrogen-doped graphite is relatively firm, which can inhibit the volume expansion of nano-silicon and reduce the volume effect. In addition, during the self-assembly process, the escape of nano-silicon particles will cause an exothermic reaction, and the at least one layer of nitrogen-doped graphite can conduct thermal diffusion to avoid the agglomeration of nano-silicon and the oxidation of nano-silicon due to the exothermic phenomenon.

In some embodiments, in a container with the same solvent, silicon nanonization is first performed, and then the at least one layer of nitrogen-doped graphite is added for self-assembly. That is, the solvent used for self-assembly is the same as that used for silicon nanonization.

In step S4, the composite is granulated in a protective environment to obtain spherical precursors. Sizes of the particles of spherical precursors after granulation are in a range of 5 $\mu$m to 10 $\mu$m. This size is suitable for the slurry preparation process of secondary batteries and can also avoid agglomeration during the sintering process. The specific granulation process is a common technical means in the art, and is not limited in the present application.

In step S5, the spherical precursors are sintered in a reducing atmosphere or in a vacuum environment at a sintering temperature of 800 °C to 1100 °C to obtain the silicon-carbon composite anode material.

The reducing atmosphere is a nitrogen-hydrogen mixture gas, an argon-hydrogen mixture gas, or the like. Sintering in a reducing atmosphere can remove excess functional groups on the surface, increase the density and integrity of the at least one layer of nitrogen-doped graphite, and the reducing atmosphere can also prevent nano-silicon from being oxidized and avoid the formation of oxides. In some embodiments, the spherical precursors are placed in a sintering furnace containing a nitrogen-hydrogen mixture gas with a gas flow rate of 2 L/min, and heat-treated at 950 °C for 8 hours to obtain the silicon-carbon composite anode material.

The spherical precursors with particle sizes of 5 $\mu$m to 10 $\mu$m are sintered in a protective atmosphere at a temperature of 800 °C to 1100 °C. This process not only removes lithium-trapping functional groups (such as hydrogen groups H-) easily present on a surface of the spherical precursors, leaving carbon functional groups (C-) and nitrogen functional groups (N-), but also allows nitrogen atoms (N) to enter the C-C lattice of the graphite material to form C-N bonds. Therefore, the electronic adsorption force between nano-silicon and the at least one layer of nitrogen-doped graphite supporting nano-silicon can be effectively improved, resulting in the silicon-carbon composite anode material, which can be used as the anode material for (lithium, sodium) secondary batteries.

Through the low-temperature drying stage in the granulation process of step S4 and the sintering stage of step S5, solid spheres rather than hollow spheres are obtained. That is, the spherical precursors are solid spheres instead of hollow spheres, avoiding adverse effects on the preparation of battery electrode sheets. The reducing atmosphere can prevent nano-silicon from being oxidized (i.e., no oxides are formed), thereby increasing the density of the silicon-carbon composite anode material.

The silicon-carbon composite anode material is composed of silicon and nitrogen-intercalated graphite, and the polymer compound added during self-assembly is carbonized and removed in the sintering step of step S5.

After the sintering process of step S5, the non-covalent bonding between the at least one layer of nitrogen-doped graphite and nano-silicon is further strengthened.

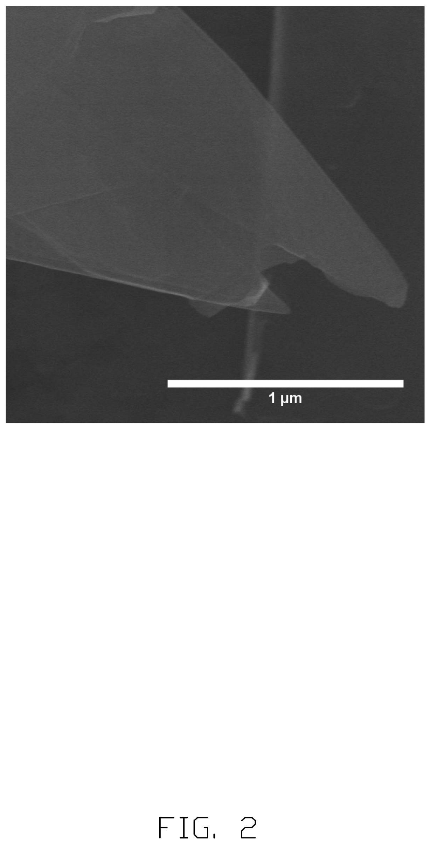

It should be understood that the numbering of steps S1 to S5 is intended to clearly describe the specific preparation method and does not constitute a limitation on the sequence of the steps. Referring to FIG. 2, a second embodiment of the present disclosure provides a silicon-carbon composite anode material prepared by the aforementioned preparation method. The silicon-carbon composite anode material has an approximately spherical core-shell structure. The core-shell structure includes a core layer of nano-silicon and a shell layer at least partially or fully coating the core layer of nano-silicon. The shell layer includes at least one layer of nitrogen-doped graphite. The core layer is bonded to the shell layer by non-covalent bonds between nano-silicon and nitrogen doped graphite. The at least one layer of nitrogen-doped graphite is bonded to other layers within the at least one layer of nitrogen-doped graphite by non-covalent bonds.

The content ratio of Si (silicon), C (carbon), and N (nitrogen) in the silicon-carbon composite anode material is Si:C:N = 1.0:(0.05-0.5):(0.01-0.05). In some embodiments, the silicon-carbon composite anode material is composed of nano-silicon and at least one layer of nitrogen-doped graphite coating nano-silicon.

Nano-silicon is made of silicon, and the at least one layer of nitrogen-doped graphite is nitrogen-intercalated graphite. Nano-silicon improves the diffusion rate of lithium-ion, and the at least one layer of nitrogen-doped graphite coating nano-silicon can prevent direct contact between silicon and the electrolyte, enabling the formation of a stable Solid Electrolyte Interphase film (SEI film) on a surface of the silicon-carbon composite anode material, thereby significantly enhancing the cycling performance of the material. In addition, the silicon-carbon composite anode material is an oxygen-free material, which can effectively reduce the volume effect.

The silicon-carbon composite anode material is completely free of oxides or almost oxide-free (especially silicon oxide). For example, containing no more than 0.1wt% of oxides relative to the total mass of the silicon-carbon composite anode material. In some embodiments, the silicon-carbon composite anode material is completely free of oxides. In another specific embodiment, the silicon-carbon composite anode material contains a small amount of oxides (such as silicon oxide), where the mass percentage of the oxides is less than 0.1wt% of the total mass of the silicon-carbon composite anode material.

A third embodiment of the present disclosure provides a secondary battery. The secondary battery includes a cathode, an anode, an electrolyte, and a separator. The anode includes the aforementioned silicon-carbon composite anode material. The secondary battery may be a metal-ion secondary battery, such as a lithium-ion secondary battery, a sodium-ion battery, etc., but is not limited thereto. In some embodiments, the silicon-carbon composite anode material, a conductive agent, and a binder with a mass percentage ratio of 88:1:11 are dissolved in a solvent to form a mixture, with the solid content controlled at 50%. The resulting mixture is coated on a copper foil current collector and vacuum-dried to obtain the anode electrode sheet. The types of the conductive agent and the binder are not limited, and they may be common conductive agents and binders in the battery field.

Hereinafter, the silicon-carbon composite anode material, its preparation method, and the secondary battery using the silicon-carbon composite anode material will be further described with reference to specific examples.

Specific Example 1

Step 1: graphite particles (such as natural graphite, artificial graphite, mesocarbon microbeads, graphene, etc.) are processed into a two-dimensional layered graphite material with a size in a range of 2 $\mu$m to 3 $\mu$m. A nitrogen-containing substance (such as hydrazine, ethylenediamine, ammonia water, urea, melamine, etc.) is introduced into the interlayers of the layered graphite material by intercalation to obtain the at least one layer of nitrogen-doped graphite. FIG. 2 is a scanning electron microscope (SEM) image of the at least one layer of nitrogen-doped graphite.

Step 2: semiconductor-grade silicon material ($\geq$10 $\mu$m) and the solvent diethylene glycol (DEG) are placed into a grinder with a rotational speed of 2400 rpm to 3000 rpm for mechanical processing, resulting in particle sizes of nano-silicon are in a range of 50 nm to 100 nm.

Step 3: a polymer compound (accounting for 5wt% of the total mass of the silicon-carbon composite anode material) and the at least one layer of nitrogen-doped graphite (accounting for 10wt% of the total mass of the silicon-carbon composite anode material) are added to nano-silicon and grind them to achieve ordered stacking self-assembly, obtaining a layered composite. During grinding, the temperature difference between the core grinding temperature and the slurry outlet temperature shall not exceed 5 °C. Thus, oxidation of nano-silicon by excess heat is avoided.

Step 4: the layered composite is subjected to spray granulation to obtain spherical precursors with particle sizes being in a range of 5 $\mu$m to 10 $\mu$m.

Step 5: the spherical precursors are placed into a sintering furnace containing a nitrogen-hydrogen (or argon-hydrogen) mixture gas with a gas flow rate of 2 L/min, and conduct heat treatment at 950 °C for 8 hours to obtain the silicon-carbon composite anode material.

Comparative Example 1

The only difference between Comparative Example 1 and Specific Example 1 is that the graphite layer in Specific Example 1 is nitrogen-doped, while the graphite layer in Comparative Example 1 has no nitrogen intercalation. That is, the graphite layer in Comparative Example 1 is pure two-dimensional graphene. All other conditions in Comparative Example 1 are the same as the corresponding conditions in Specific Example 1, which will not be repeated here.

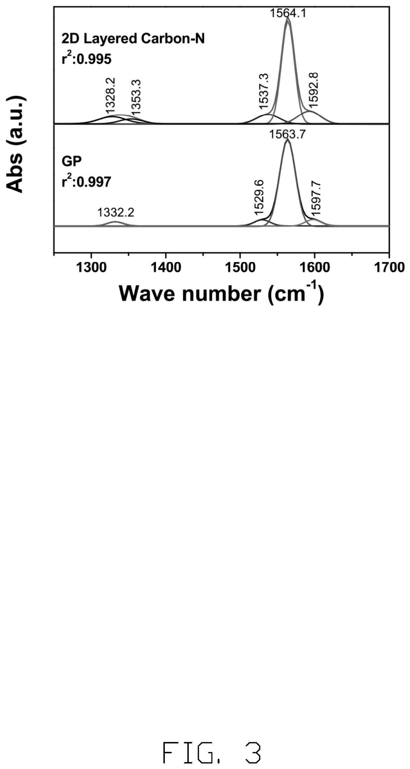

FIG. 3 is a Raman spectrum of the at least one layer of nitrogen-doped graphite in Specific Example 1 and the graphene in Comparative Example 1. In FIG. 3, GP represents graphene, and 2D Layered Carbon-N represents the at least one layer of nitrogen-doped graphite (where the number of graphite layers n=1, so 2D Layered Carbon-N denotes nitrogen-doped graphene). It can be seen from FIG. 3 that the G bands shift from 1529.6 cm$^{-1}$ to 1537.3 cm$^{-1}$, 1563.7 cm$^{-1}$ to 1564.1 cm$^{-1}$, and 1597.7 cm$^{-1}$ to 1592.8 cm$^{-1}$, and the overall G band shape becomes narrower (from 68 to 55), indicating that nitrogen atoms in the nitrogen-doped graphene cause changes in the sp$^2$ hybridization of graphene. FIG. 3 clearly shows that compared with graphene, nitrogen-doped graphene has two D bands at 1328.2 cm$^{-1}$ and 1353.3 cm$^{-1}$, indicating that the nitrogen atoms intercalated in the at least one layer of nitrogen-doped graphite cause changes between graphene layers and increase the disordered structure. Doping causes structural distortion; although carbon and nitrogen have similar atomic numbers, it still leads to changes in the carbon lattice. Therefore, nitrogen is more likely to be doped into sp$^2$ hybrid orbitals, causing structural distortion. Moreover, the outermost electron orbital of nitrogen is 2p$^3$, while that of carbon is 2p$^2$, thus providing the carrier orbitals required to improve charge transport.

After Raman analysis, the full width at half maximum (FWHM) of the D band (1200 cm$^{-1}$ to 1400 cm$^{-1}$) and G band (1500 cm$^{-1}$ to 1600 cm$^{-1}$) was calculated. The number of layers is less than 3, belonging to few-layer. Meanwhile, ID1/G<1, ID2/G<0.1, ID3/G<0.1, and ID4/G<0.1, which also indicates that the graphite material was not severely crushed during processing and the edges of the graphite material remain intact.

Meanwhile, the diffraction pattern of the composite phase obtained by X-ray diffractometer (XRD) clearly shows only the characteristic peaks of Si (Cubic, Fd-3m (227)) and C (Hexagonal, P63/mmc (194)).

Specific Example 2

Dissolve the silicon-carbon composite anode material prepared in Specific Example 1, a conductive agent (conductive carbon black), and a binder (styrene-butadiene rubber, SBR) in water at a mass ratio of "silicon-carbon composite anode material: conductive agent: binder = 88:1:11" to form a mixture, which is formulated into a slurry with a solid content of 50%. The resulting slurry is coated on a copper foil current collector and vacuum-dried to obtain the anode electrode sheet.

Then, assemble a ternary cathode electrode sheet, an electrolyte with a lithium salt concentration of 1 mol/L (composition: $LiPF_6$, EC, DMC, and EMC), and a Celgard2400 separator into a pouch battery stack and perform 5Ah assembly using a conventional production process. Following the same method, assemble the battery using the anode material prepared in Comparative Example 1.

The silicon-carbon composite anode material prepared in Specific Example 1 is denoted as Sample 1, and the anode material prepared in Comparative Example 1 is denoted as Sample 2. The battery assembled with Sample 1 is denoted as Battery 1, and the battery assembled with Sample 2 is denoted as Battery 2. Battery 1 and Battery 2 were subjected to the following performance tests respectively.

Anode lithium-ion extraction (de-lithiation) capacity test: The current density is 0.1C, and the voltage drops to 3.0V. Then the gram capacity of the anode is converted according to the following formula to obtain the extraction capacity (de-lithiation capacity):

$$Q \ (mAh \cdot g^{-1}) = \frac{\text{Rated Capacity (mAh)}}{\text{Coating Weight per Unit Area (g/cm}^2) \cdot \text{Total Area of Current Collector (cm}^2)}$$

Referring to Table 1 for the above performance test results.

Table 1 Battery Performance Test Results

| Item | Carbon-Doped Element | Addition Percentage | Faraday Initial Efficiency | De-lithiation Gram Capacity (mAh·g⁻¹) | Retention Rate (1000 cycles) |
|------|---------------------|---------------------|---------------------------|---------------------------------------|------------------------------|
| Battery 1 | Nitrogen | 3% | 90% | 2400 | 70% |
| Battery 2 | None | None | 85% | 2100 | 40% |

In Table 1, "Faraday Initial Efficiency" refers to the first charge-discharge efficiency, and "Retention Rate" refers to the capacity retention rate. It can be seen from Table 1 that batteries assembled with the silicon-carbon composite anode material prepared using the at least one layer of nitrogen-doped graphite have a higher retention rate. This indicates that the silicon-carbon composite anode material prepared by the present disclosure can inhibit volume expansion and improve the retention rate of the battery.

The silicon-carbon composite anode material, the preparation method of the silicon-carbon composite anode material, and the secondary battery using the same have the following advantages: First, the silicon-carbon composite anode material is oxide-free. During charge-discharge cycles, there are no irreversible oxides to increase lithium-ion consumption, thereby improving efficiency; Second, the silicon-carbon composite anode material includes nano-silicon and at least one layer of nitrogen-doped graphite coating nano-silicon. Atomic bonds between carbon atoms in at least one layer nitrogen-doped graphite are $sp^2$ hybridization bonds, having a large specific surface area, high conductivity, and excellent chemical stability, which can inhibit volume expansion and improve the electrochemical performance of the silicon-carbon composite anode material; Third, nano-silicon and the at least one layer of nitrogen-doped graphite are bonded by non-covalent bonds, so they are firmly combined, and the at least one layer of nitrogen-doped graphite is not easy to fall off or peel off from nano-silicon; Fourth, the at least one layer of nitrogen-doped graphite coating nano-silicon can improve the poor conductivity of nano-silicon; Fifth, the preparation method of the silicon-carbon composite anode material has a simple process, easy process control, and is suitable for industrial production.

In addition, those skilled in the art may make other changes within the spirit of the present disclosure. Of course, all such changes made in accordance with the spirit of the present disclosure shall be included within the scope of protection claimed by the present disclosure.

**Claims**

1.  A silicon-carbon composite anode material having a core-shell structure, the core-shell structure comprising:

    a core layer of nano-silicon; and
    a shell layer at least partially or fully coating the core layer of nano-silicon, and comprising at least one layer of nitrogen-doped graphite;
    wherein the core layer is bonded to the shell layer by non-covalent bonds between nano-silicon and nitrogen doped graphite.

2. The silicon-carbon composite anode material according to claim 1, wherein the at least one layer of nitrogen-doped graphite is bonded to other layers within the at least one layer by non-covalent bonds.

3. The silicon-carbon composite anode material according to claim 1, wherein atomic bonds between carbon atoms in the at least one layer of nitrogen-doped graphite are $sp^2$ hybridization bonds.

4. The silicon-carbon composite anode material according to claim 1, wherein a nitrogen content of the at least one layer of nitrogen-doped graphite is less than or equal to 10%.

5. The silicon-carbon composite anode material according to claim 4, wherein the nitrogen content of the at least one layer of nitrogen-doped graphite is 2% to 5%.

6. The silicon-carbon composite anode material according to claim 1, wherein particle sizes of nano-silicon are in a range of 50 nm to 100 nm.

7. The silicon-carbon composite anode material according to claim 6, wherein sizes of the core-shell structure are in a range of 5 $\mu$m to 10 $\mu$m.

8. A method of preparing a silicon-carbon composite anode material, comprising:

introducing a nitrogen-containing substance into at least one layer of two-dimensional graphite layer to form at least one layer of nitrogen-doped graphite;
nanonizing silicon material in a protective environment to form nano-silicon;
performing homogeneous self-assembly of the at least one layer of nitrogen-doped graphite, nano-silicon, and a polymer compound in the protective environment to form a composite;
granulating the composite in the protective environment to obtain spherical precursors; and
sintering the spherical precursors in a reducing atmosphere or in a vacuum environment to obtain the silicon-carbon composite anode material.

9. The method according to claim 8, wherein the nitrogen-containing substance is introduced into the at least one layer of two-dimensional graphite layer by intercalation, and the nitrogen-containing substance is hydrazine, ethylenediamine, ammonia water, urea, or melamine.

10. The method according to claim 8, wherein the at least one layer of two-dimensional graphite layer comprises a plurality of two-dimensional graphite layers, and a number of the plurality of two-dimensional graphite layers is less than or equal to three.

11. The method according to claim 8, further comprising making the at least one layer of two-dimensional graphite layer having lengths in at least one dimension in a range of 1 $\mu$m to 3 $\mu$m.

12. The method according to claim 8, further comprising selecting the polymer compound from at least one of polyvinylpyrrolidone, polyvinyl alcohol, polyphthalamide, polyacrylic acid, N-allyl-(2-ethylxanthate) propionamide, and dimethylformamide.

13. A secondary battery, comprising a cathode, an anode, an electrolyte, and a separator, the anode comprising a silicon-carbon composite anode material according to any one of claims 1 to 7.

Graphite particles

Nitrogen-containing substance

Silicon material

Self-assembly

Grinded

N doped

Nitrogen-doped graphite

Polymer compound

1 μm

Granulated and sintered

FIG. 1

FIG. 2

FIG. 3

# EP 4 779 714 A1

## EUROPEAN SEARCH REPORT

**Application Number**

EP 26 15 2392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEE WON JUN ET AL: "N-doped graphitic self-encapsulation for high performance silicon anodes in lithium-ion batteries", ENERGY & ENVIRONMENTAL SCIENCE, vol. 7, no. 2, 4 November 2013 (2013-11-04), pages 621-626, XP093405553, Cambridge ISSN: 1754-5692, DOI: 10.1039/c3ee43322f * Section "Broader context"; p. 622 left column line 15; p. 622 right column, lines 8 to 10; p. 624, left column, second paragraph; Fig. 2a. * ----- | 1-7,13 | INV. H01M4/36 H01M4/38 H01M4/62 |
| X | EP 3 435 451 A1 (OPTIMUMNANO ENERGY CO LTD [CN]) 30 January 2019 (2019-01-30) * claim 1, example 1, Fig. 2, [0028] * ----- | 8,10,11 | |
| X | CN 110 165 211 A (INST XINGHUO SCI & TECH) 23 August 2019 (2019-08-23) * example 5 * ----- | 8,9,12 | TECHNICAL FIELDS SEARCHED (IPC) H01M |

The present search report has been drawn up for all claims

| Place of search | Date of completion of the search | Examiner |
|---|---|---|
| Munich | 10 June 2026 | Gregori, Giuliano |

EPO FORM 1503 03.82 (P04C01)

## ANNEX TO THE EUROPEAN SEARCH REPORT
## ON EUROPEAN PATENT APPLICATION NO.

EP 26 15 2392

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2026

| Patent document cited in search report | | Publication date | Patent family member(s) | | Publication date |
|---|---|---|---|---|---|
| EP 3435451 | A1 | 30-01-2019 | CN | 107706360 A | 16-02-2018 |
| | | | EP | 3435451 A1 | 30-01-2019 |
| | | | US | 2019036108 A1 | 31-01-2019 |
| CN 110165211 | A | 23-08-2019 | NONE | | |

EPO FORM P0459

For more details about this annex : see Official Journal of the European Patent Office, No. 12/82

**EP 4 779 714 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202510089274